# EUROPEAN PATENT APPLICATION

(11) **EP 2 085 917 A1**
(43) Date of publication of application: **05.08.2009**
(21) Application number: 09151214.5
(22) Date of filing: 23.01.2009
(51) Int. Cl.: G06Q 10/00

(54) **Portable terminal and method of displaying user data therein**

(30) Priority: 30.01.2008 KR 20080009600
(71) Applicant: Samsung Electronics Co., Ltd., Suwon-si, Gyeonggi-do (KR)
(72) Inventor: Rhee, Young Ho Samsung Electronics Co., Ltd., Gyeonggi-do (KR); Kim, Jung Hun Samsung Electronics Co., Ltd., Gyeonggi-do (KR); Chang, Il Ku Samsung Electronics Co., Ltd., Gyeonggi-do (KR)
(74) Representative: Harrison Goddard Foote

(57) **Abstract**

A portable terminal and method of displaying user data therein are provided. The method of displaying user data in a portable terminal includes displaying, in a user data display mode, a first area for displaying pre-stored anniversaries and a second area for displaying user data associated with each pre-stored anniversary, and displaying, if an anniversary is selected from the first area, user data associated with the selected anniversary in the second area. Therefore, user data can be displayed efficiently in a portable terminal, thereby enabling a user of a portable terminal to easily search for desired user data through various methods.

## Description

### BACKGROUND OF THE INVENTION

### 1. Field of the Invention:

The present invention relates to a portable terminal and a method of performing an additional function thereof. More particularly, the present invention relates to a portable terminal capable of integrally displaying user data and a method of displaying user data therein.

### 2. Description of the Related Art:

Advances in information and communication technologies have enabled a portable terminal to perform multiple functions. In addition to call processing, a portable terminal supports various additional functions available by a user request and may store a large amount of data. The data stored in a portable terminal includes various user data such as information related to calls, messages, E-mails, MP3 files, images, schedules, and alarm information that can be searched for by a user request.

However, in the case of displaying user data in the portable terminal, the user data is displayed according to a classification item. Thus, upon searching for user data in the portable terminal, a user of the portable terminal should search for desired user data after entering a menu divided according to a classification item of the user data. Therefore, displaying user data in the portable terminal with a conventional method is not efficient in that multiple steps are involved to enter a search for desired user data.

### SUMMARY OF THE INVENTION

An aspect of the present invention is to address at least the above- mentioned problems, and/or disadvantages and to provide at least the advantages described below. Accordingly, an aspect of the present invention is to provide a portable terminal capable of integrally displaying user data and a method of displaying user data therein.

According to an aspect of the present invention, a method of displaying user data in a portable terminal is provided. The method includes displaying, in a user data display mode, a first area for displaying pre-stored anniversaries and a second area for displaying user data associated with each pre-stored anniversary, and displaying, if an anniversary is selected from the first area, user data associated with the selected anniversary in the second area.

According to another aspect of the present invention, a method of displaying user data in a portable terminal is provided. The method includes displaying, in a user data display mode, pre-stored anniversaries, and displaying, if an anniversary is selected from the displayed anniversaries, user data associated with the selected anniversary.

According to another aspect of the present invention, a portable terminal is provided. The portable terminal includes a memory unit for storing user data associated with pre-stored anniversaries, each user data corresponding to at least one classification item, a display unit for displaying, in a user data display mode, a first area for arranging the pre-stored anniversaries, a second area for displaying data items of each user data, and a third area for arranging the classification items, and a control unit for displaying, if an anniversary is selected from the first area, data items of the user data associated with the selected anniversary in the second area, and if a classification item is selected from the third area, for displaying data items corresponding to the selected classification item in the second area.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features and advantages of certain exemplary embodiments of the present invention will be more apparent from the following detailed description taken in conjunction with the accompanying drawings, in which:

FIG. 1 illustrates a configuration of a system for displaying user data according to an exemplary embodiment of the present invention;

FIG. 2 is a schematic block diagram illustrating a configuration of a portable terminal according to an exemplary embodiment of the present invention;

FIG. 3 is a flowchart illustrating a method of displaying user data according to an exemplary embodiment of the present invention;

FIG. 4 is a flowchart illustrating a process of displaying an anniversary list in the method of FIG. 3, according to an exemplary embodiment of the present invention;

FIG. 5 is a flowchart illustrating a process of displaying user data in the method of FIG. 3, according to an exemplary embodiment of the present invention;

FIGS. 6A to 6C are examples of screens displaying user data according to an exemplary embodiment of the present invention.

FIG. 7 is a flowchart illustrating a method of displaying user data of FIG. 3 according to an exemplary embodiment of the present invention; and

FIG. 8 is a flowchart illustrating a process of displaying user data in the method of FIG. 7, according to an exemplary embodiment of the present invention.

Throughout the drawings, like reference numerals will be understood to refer to like parts, components and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions are omitted for clarity and conciseness.

In the following description, the term "user data" refers to information generated in a portable terminal or transmitted from an external device and stored in the portable terminal that can be made available by a user request. The user data may be classified by at least one classification item such as a call, a schedule, a message, an image, an MP3 file, a memo, and the like. The user data may include a data item corresponding to each user data. The data item refers to an image representing contents of the corresponding user data. The data item may be a thumbnail or an image set up according to a classification item of corresponding user data. The data item may further display a date of generation of the corresponding user data. The term "anniversary" refers to a date registered to identify an event occurring on the same date every year in a portable terminal. An anniversary may be a user anniversary registered by a user of a portable terminal or a common anniversary registered in a portable terminal by default. The user anniversary, for example, may be a wedding an anniversary, a birthday, and the like that can be registered when generating user data corresponding to a particular classification item. The common anniversary, for example, may be Christmas, Halloween, and the like.

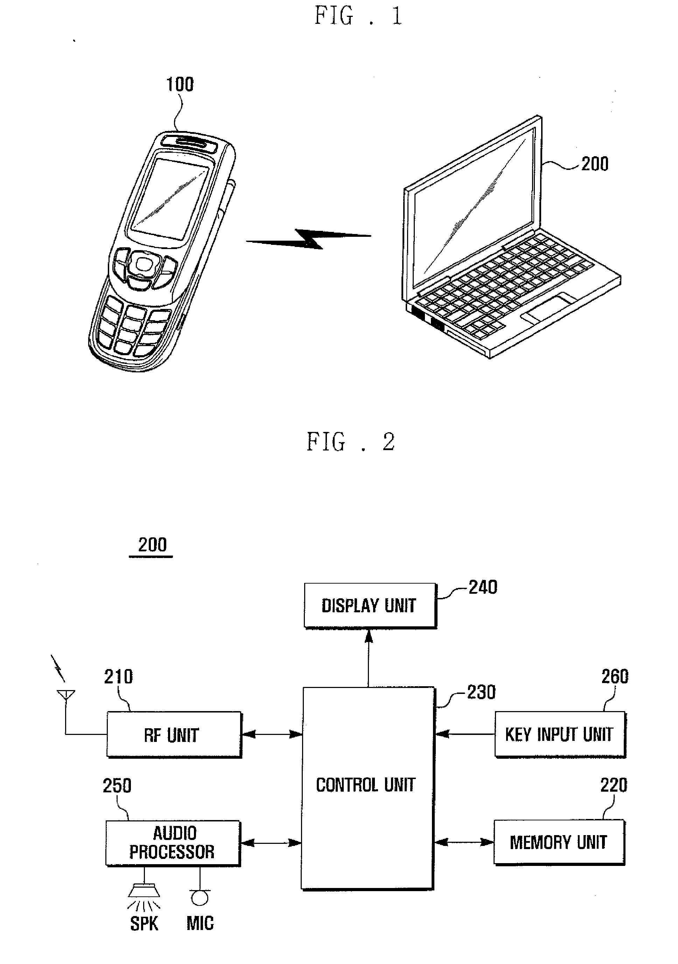

FIG. 1 illustrates a configuration of a system for displaying user data according to an exemplary embodiment of the present invention.

Referring to FIG. 1, a system for displaying user data includes at least one portable terminal. FIG. 1 shows a portable terminal including two portable terminals 100 and 200. In the system for displaying user data, the portable terminal (100, 200) displays user data generated in the portable terminal (100, 200), and user data transmitted from another portable terminal (100, 200). The portable terminal (100, 200) may integrally display user data generated in the portable terminal and user data transmitted from another portable terminal. The portable terminal (100, 200) may further arrange user data in order of a generation date of user data or in order of a generation time point of user data when displaying the user data. The portable terminal (100, 200) may further arrange user data in an order of a registration time point of a pre-stored anniversary.

FIG. 2 is a schematic block diagram illustrating a configuration of a portable terminal according to an exemplary embodiment of the present invention. Hereinafter, the configuration of the portable terminal 200 is described. The configuration of the portable terminal 100 is substantially identical to portable terminal 200 and therefore a description thereof will be omitted for conciseness.

Referring to FIG. 2, the portable terminal 200 includes a Radio Frequency (RF) unit 210, memory unit 220, control unit 230, display unit 240, audio processor 250, and key input unit 260.

The RF unit 210 performs a wireless communication function of the portable terminal 200. The RF unit 210 includes an RF transmitter for up-converting a frequency of a signal to be transmitted and amplifying the signal, and an RF receiver for low-noise amplifying a received signal and down-converting a frequency of the signal.

The memory unit 220 may include at least one of a program memory and a data memory. The program memory may store at least one of an operation program of the portable terminal 200 and a program for displaying user data according to exemplary embodiments of the present invention. The data memory may store data generated while performing the program. The memory unit 220 may store user data generated in the portable terminal 200. The memory unit 220 may further store user data transmitted through the RF unit 210. The memory unit 220 may store the user data by classifying the user data according to a classification item. The memory unit 220 may register a specific date as an anniversary according to an exemplary embodiment of the present invention.

The control unit 230 may control general operations of the portable terminal 200. The control unit 230 may include a data processor for encoding and modulating a signal to be transmitted and for demodulating and decoding a received signal. The data processor may include at least one of a modem and a codec. The codec may include at least one of a data codec for processing packet data and an audio codec for processing an audio signal such as a voice. Further, the control unit 230 may display registered user data in an order of date of anniversary when displaying the user data according to an anniversary.

The display unit 240 may display a state of the portable terminal 200 by the control of the control unit 230. The display unit 240 can use a Liquid Crystal Display (LCD), and in this case, the display unit 240 may include at least one of an LCD control unit, a memory for storing display data, and an LCD display element. If the LCD includes a touch screen, the LCD may be operated as an input unit.

The audio processor 250 may reproduce an audio signal from an audio codec through a speaker (SPK), and may transmit an audio signal from a microphone (MIC) to the audio codec.

The key input unit 260 may includes at least one of a key for inputting numeral and character information and a function key for setting various functions.

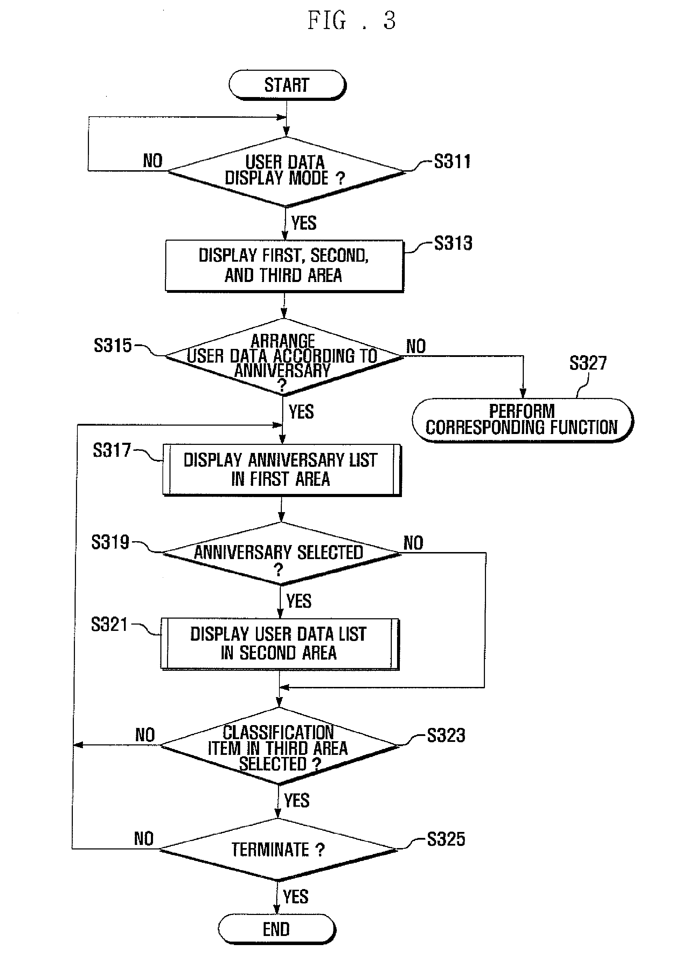

FIG. 3 is a flowchart illustrating a method of displaying user data according to an exemplary embodiment of the present invention.

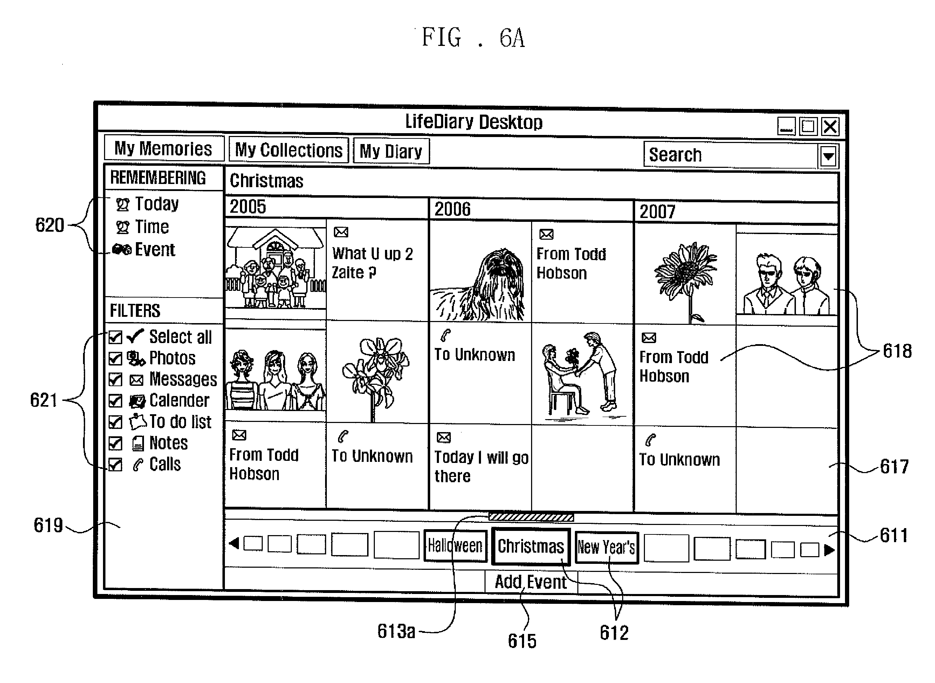

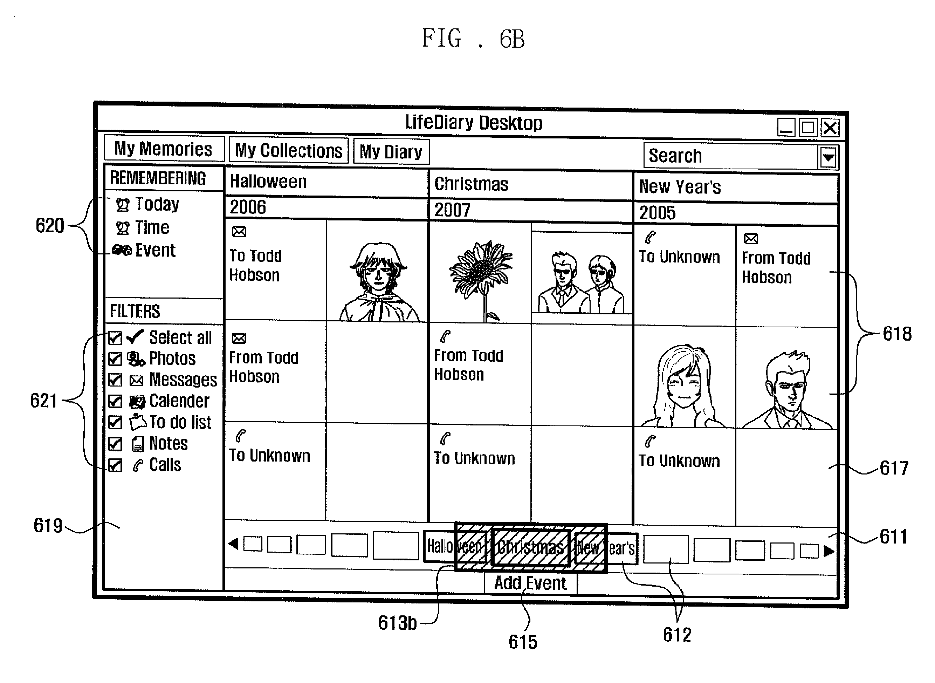

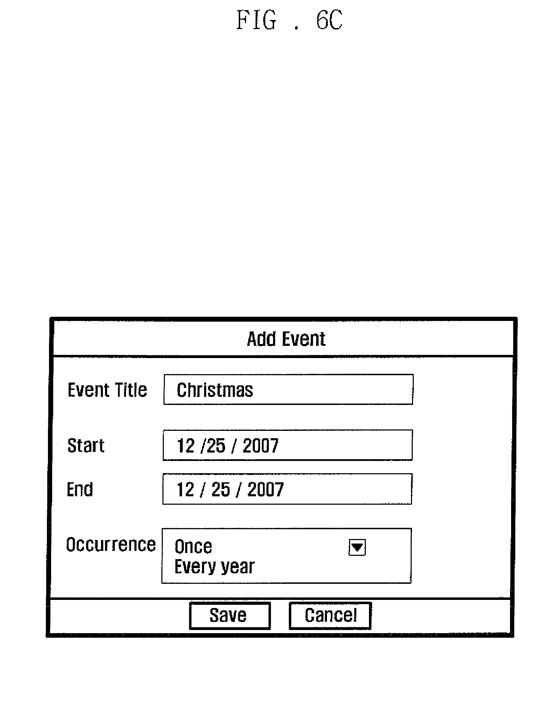

FIGs. 6A to 6C are examples of screens displaying user data according to an exemplary embodiment of the present invention. More specifically, FIGs. 6A and 6B are examples of a user data display screen displaying user data, and FIG. 6C is an example of a user data display screen when adding an anniversary.

Referring to FIG. 3, the control unit 230 may determine whether a user data display mode is selected in step S311.

If a user data mode is selected, the control unit 230 may control the display of a first area 611, a second area 617, and a third area 619 in step S313 as shown in FIGs. 6A and 6B. The control unit 230 may control to display the second area 617 above the first area 611, and the third area 619 at a side of the second area 617.

When starting a user data display mode, the control unit 230 may control to display the first area 611 and the second area 617 as blank areas with no data therein. The control unit 230 may further control to display a preset criterion for displaying user data or a portion of user data. The control unit 230 may control to display arrangement conditions 620 of user data as a list in the third area 619. The control unit 230 may control to display the arrangement of the alignment conditions 620 in a vertical direction. The alignment conditions 620 may be a date, time, anniversary, and the like. The control unit may further control to display a list of classification items 621 for classifying user data in the third area 619. The control unit 230 may control to display the alignment of the classification items 621 in a vertical direction. The classification items 621 may be a call, message, image, MP3 file, memo, and the like.

If a request for arranging user data according to an anniversary is not received at step S315, the control unit 230 may perform a corresponding function in step S327. For example, the control unit 230 may control to display a list of dates in the first area 611. If a date is selected in the first area 611, the control unit 230 may control to display corresponding user data generated on the selected date in the second area 617. The control unit may further control to display a list of times of a current date in the first area 611. If a specific time is selected in the first area 611, the control unit 230 may control to display corresponding user data generated at the selected time in the second area 617.

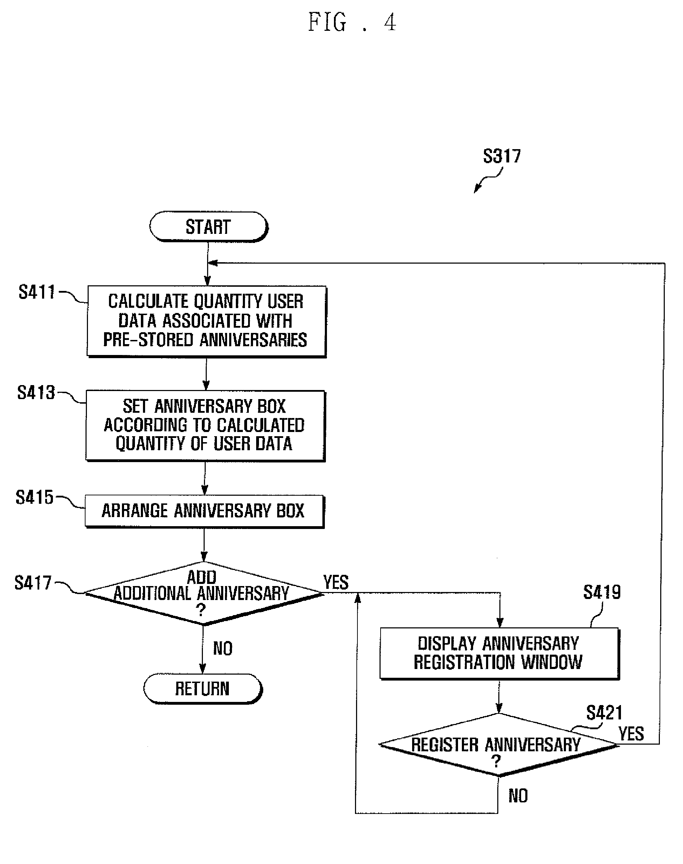

If a request for arranging user data according to an anniversary is received in step S315, the control unit 230 may control to display a list of anniversaries in the first area 611 in step S317. The control unit 230 may control to display the arrangement of the anniversaries in a horizontal direction. The control unit 230 may further control to display the arrangement of pre-stored anniversaries in an order of a date of the anniversaries. The control unit 230 may further control to display an add key 615 for registering an additional anniversary below the first area 611. The process of displaying an anniversary list of step S317 is described in detail with reference to FIG. 4.

FIG. 4 is a flowchart illustrating a process of displaying an anniversary list of step S317 in the method of FIG. 3, according to an exemplary embodiment of the present invention.

Referring to FIG. 4, when a request for arranging user data according to an anniversary is detected, the control unit 230 may calculate the quantity of user data associated with a pre-stored anniversary in step S411. In other words, the control unit 230 may calculate the quantity of user data generated on each anniversary. For example, if an anniversary is Christmas, the control unit 230 may calculate the quantity of user data generated on December 25. Next, the control unit 230 may set a graphic element 612 according to a calculated quantity of user data in step S413. For example, the control unit 230 may set the graphic element 612 as a box form by controlling to display the size of the box according to a calculated number of user data. The control unit 230 may further set the graphic element 612 as a box form by controlling to display the anniversary name in various font sizes according to a calculated quantity of user data. Then, the control unit 230 may arrange the graphic element 612 in the first area 611 in step S415. The control unit 230 may control to display the arrangement of the graphic element 612 in order of a generation date of the anniversary. The control unit 230 may then determine whether a request for adding an additional anniversary is received in step S417. If a request for adding an additional anniversary is not received, the control unit 230 may return to step S317 in FIG. 3.

If a request for adding an additional anniversary is received through an add key 615 while the graphic element 612 is being display at step S417, the control unit 230 may control to display a window for registering an additional anniversary in step S419, as illustrated in FIG. 6C. The control unit 230 may control to display the registration window as a popup in at least a portion of at least one of the first area 611, the second area 617, and the third area 619. When registering an additional anniversary, the control unit 230 may receive as an input an anniversary name, an anniversary date, and an occurrence period of the anniversary. When data of a desired anniversary is input, the control unit 230 may register the anniversary in step S421 and returns to step S411. That is, the control unit 230 may calculate the quantity of user data associated with the additionally registered anniversary. The control unit 230 may set a new graphic element 612 as a box form corresponding to the calculated quantity of user data for the additionally registered anniversary, and add the new graphic element 612 to the previously arranged graphic elements 612.

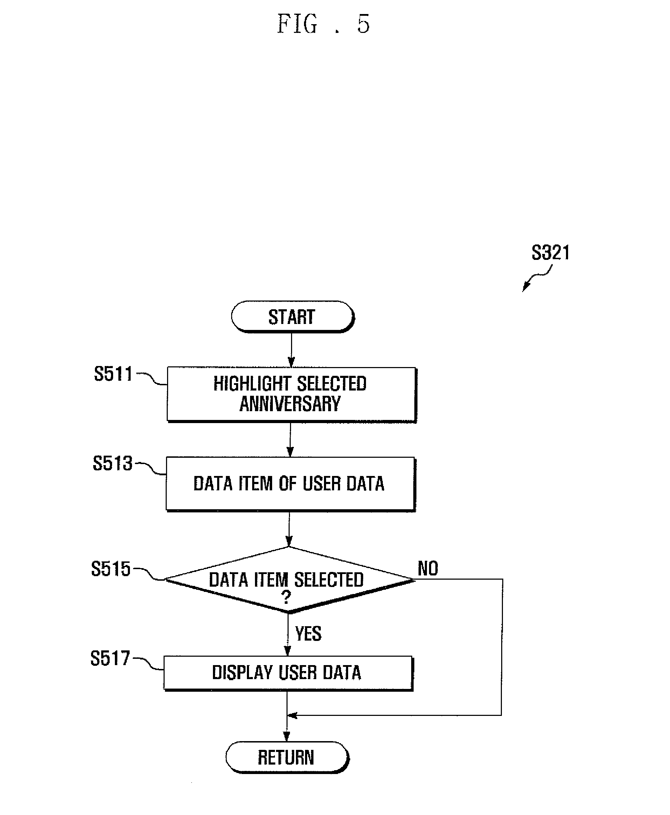

Returning to FIG. 3, if an anniversary is not selected in step S319, the process may proceed to step S323 which is discussed below. If an anniversary is selected in step S319, the control unit 230 may control to display a list of user data in the second area 617 in step S321. The control unit 230 may divide the second area 617 into at least one area, classify the user data according to a occurrence period of the user data, and display the classified user data in a corresponding divided area in the second area 617. The process of displaying user data of step S321 is described in detail with reference to FIG. 5.

FIG. 5 is a flowchart illustrating a process of displaying user data of step S321 in the method of FIG. 3, according to an exemplary embodiment of the present invention.

Referring to FIG. 5, when an anniversary is selected, the control unit 230 may control to display the selected graphic element 612 with a highlight box 613a and a highlight box 613b in step S511. Here, the control unit 230 may control to display a highlight on area adjacent to the selected graphic element 612 in the first area 611 with a highlight box 613a, as illustrated in FIG. 6A. Alternatively, the control unit 230 may control to display highlights for both the selected graphic element 612 and a portion of area of the graphic elements 612 adjacent to the selected graphic element 612 with a highlight box 613b, as illustrated in FIG. 6B. If the quantity of user data of the anniversary corresponding to the selected graphic element 612 is below a preset value, the control unit 230 may control to display a highlight of at least a portion of the adjacent graphic elements 612. That is, the control unit 230 may control to display a highlight with a highlight box 613b by varying the size of the highlight box 613b according to the quantity of user data to be displayed in the second area 617.

Next, the control unit 230 may control to display the arrangement of data items 618 of user data associated with an anniversary corresponding to the selected graphic element 612 in step S513. The control unit 230 may classify the data items 618 according to an anniversary and an occurrence period of the data items 618, and may control to display the data items 618 in at least one area from the divided areas in the second area 617. The control unit 230 may further control to display the data items 618 according to at least one of an occurrence period and generation time order.

If a data item 618 is selected from data items 618 arranged in the second area 617 in step S515, the control unit 230 may control to display user data corresponding to the selected data item 618 in step S517. Here, the control unit 230 may control to display the user data on a preset window corresponding to a classification item of the user data. The control unit 230 may control to display a window for displaying the user data on at least a portion of at least one of the first area 611, the second area 617, and the third area 619 as a popup. Alternatively, the control unit 230 may control to display the user data on a window separate from the first area 611, the second area 617, and the third area 619. If a data item 618 is not selected from data items 618 arranged in the second area 617 in step S515, the process may proceed to step S323.

Returning to FIG. 3, if a classification item is selected in the third area 619 in step S323, the process may return to step S317. Otherwise, if a request for termination of displaying user data is received in step S325, the method of displaying user data may terminate. If no request for termination of displaying user data is received in step S325, the control unit controls to repeat steps S317 to S325 until a termination request is received.

In the exemplary embodiments described above, a method of displaying a window for registering an additional anniversary when a request for registering an additional anniversary is generated through an addition key in a state of displaying a list of anniversaries is disclosed. However, the present invention is not limited thereto. A window for registering an additional anniversary may be displayed by generating a request through various input devices of a portable terminal. Further, in addition to adding an additional anniversary through the selection window, a pre-registered anniversary can be edited or deleted.

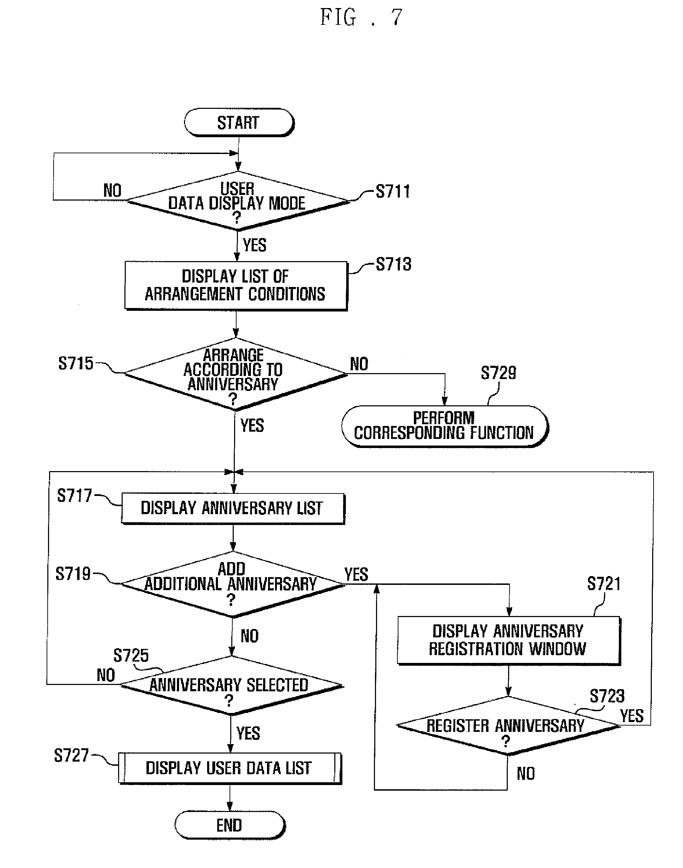

FIG. 7 is a flowchart illustrating another method of displaying user data of FIG. 3 according to an exemplary embodiment of the present invention.

Referring to FIG. 7, the control unit 230 may determine whether a user data display mode is selected in step S711. If a user data display mode is selected, the control unit 230 may control to display a list of arrangement conditions such as an anniversary, a date, a time, and the like in step S713.

If a request for arranging user data according to an anniversary is not detected in step S715, the control unit 230 may perform a corresponding function in step S729. For example, the control unit 230 may display a list of dates, and if a specific date is selected, display user data generated on the selected date. The control unit 230 may further display a list of times of a current date. If a time is selected, the control unit 230 may display user data generated at the selected time.

If a request for displaying user data according to an anniversary is received in step S715, the control unit 230 may control to display an anniversary list in step S717. At this time, the control unit 230 may control to display pre-stored anniversaries in order of a date of an anniversary. The control unit 230 may further control to display a soft key for entering a sub menu.

The control unit 230 may determine whether a request for registering an additional anniversary through a sub menu is received while displaying the anniversary list in step S719. If a request for registering an additional anniversary is received, the control unit 230 may control to display a window for registering an additional anniversary in step S721. Herein, the control unit 230 may control to display the registration window as a popup. When registering an additional anniversary, the control unit 230 may receive as an input an anniversary name, an anniversary date, and an occurrence period of the anniversary. When data of a desired anniversary is input, the control unit 230 may register the anniversary in step S723, and may then return to step S717.

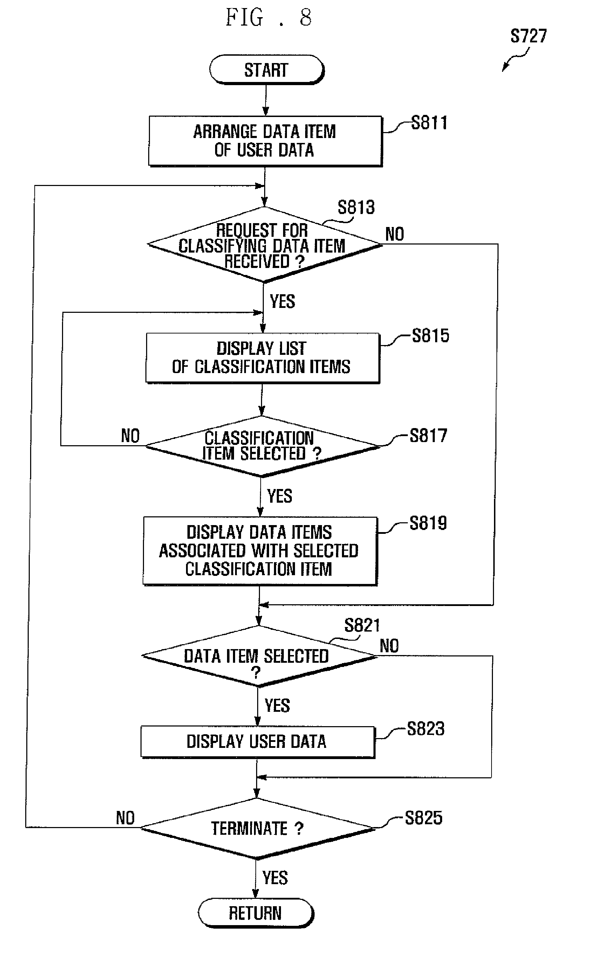

If an anniversary is selected while displaying a list of anniversaries in step S725, the control unit 230 may control to display corresponding user data in step S727. The control unit 230 may control to display the user data by classifying the user data according to a specific criterion. The process of displaying user data of step S727 is described in detail with reference to FIG. 8.

FIG. 8 is a flowchart illustrating the process of displaying user data of step S727 in the method of FIG. 7, according to an exemplary embodiment of the present invention.

Referring to FIG. 8, when an anniversary is selected, the control unit 230 may control to display an arrangement of each data item of user data associated with the selected anniversary in step S811. Herein, the control unit 230 may classify data items according to an occurrence period of the data items, and may control to display an arrangement of the classified data items in a horizontal direction according to the occurrence period. That is, the control unit 230 may control to display the arrangement of the data items according to an occurrence period and in order of generation time point of the data times. If data items can not be displayed in a single window, the control unit 230 may further control to display a scroll bar. The control unit 230 may further classify data items in at least one group according to an occurrence period of the data items, and may control to display the group as a list. The control unit 230 may further control to display a soft key for entering a submenu.

If a request for classifying data items according to a specific classification item is not input through a submenu in step S813, the process may proceed to step S821 which is described below. If a request for classifying data items according to a specific classification item is input through a submenu in step S813, the control unit 230 may control to display a list of classification items in step S815. Herein, the control unit 230 may control to display a classification item in a preset window. The control unit 230 may control to display a window for displaying a classification item as a popup. If a classification item is selected in step S817, the control unit 230 may control to display an arrangement of the data items associated with the selected classification item in step S819. For example, if a received call and received email are selected among the classification items when an anniversary is Christmas, the control unit 230 may control to display the arrangement of data items corresponding to a received call and received email on Christmas. If a classification item is not selected in step S817, the process may return to step S815

If a data item is not selected in step S821, the process may proceed to step S825 which is described below. If a data item is selected in step S821, the control unit may control to display user data associated with the selected data item in step S823. The control unit 230 may control to display the user data on a preset window corresponding to a classification item. The control unit 230 may control to display the window for displaying the user data as a popup.

If a request for termination of displaying user data is received in step S825, the control unit 230 may return to step S727 of FIG. 7 and the user data display method terminates. If no termination request is received at step S825, the control unit 230 may return to step S813.

In exemplary embodiments of the present invention, a method of registering an anniversary on a specific date in a portable terminal is disclosed, but the present invention is not limited thereto. An anniversary may be registered by a particular tag or particular title. For example, when registering user data in a portable terminal, the user data may correspond to a particular tag. Here, the control unit may control to display a list of anniversaries determined by the tags in response to a user data display mode. In addition, when registering user data in a portable terminal, the user data may be registered by a particular title. Here, the control unit may control to display a list of anniversaries determined by the titles in response to a user data display mode.

As described above, in exemplary embodiments of the present invention, a method of displaying user data according to an anniversary in a portable terminal is disclosed. In exemplary embodiments of the present invention, user data can be displayed according to a classification item and according to an anniversary, thereby user data can be displayed efficiently. Accordingly, a user of a portable terminal can search for desired user data efficiently through various methods.

While the present invention has been shown and described with reference to certain exemplary embodiments thereof, it will be understood by those skilled in the art that various changes in form and details may be made therein without departing from the spirit and scope of the present invention as defined by the appended claims and their equivalents.

## Claims

1. A method of displaying user data in a portable terminal, the method comprising:
displaying, in a user data display mode, a first area for displaying pre-stored anniversaries and a second area for displaying user data associated with each pre-stored anniversary; and
displaying, if an anniversary is selected from the first area, user data associated with the selected anniversary in the second area.

2. The method of claim 1, further comprising:
displaying a third area for arranging classification items of the user data; and
displaying, if a classification item is selected in the third area, user data corresponding to the selected classification item from the displayed user data.

3. The method of claim 2, wherein the second area is displayed above the first area, and the third area is displayed at a side of the second area.

4. The method of any of claims 2 or 3, wherein the anniversaries displayed in the first area are arranged in a horizontal direction, and the classification items displayed in the third area are arranged in a vertical direction.

5. The method of any of claims 1 to 4, wherein the anniversaries comprise at least one of a user anniversary registered by a user and a common anniversary preregistered in the portable terminal as a default anniversary.

6. The method of any of claims 1 to 5, wherein the displaying of the user data associated with the selected anniversary comprises displaying data items of the user data in an order of a time point at which a data item is generated.

7. The method of claim 6, wherein the displaying of the data items comprises:
classifying the data items according to an occurrence period in which the data item is generated; and
displaying the classified data items in at least one area of at least one area into which the second area is divided according to the occurrence period.

8. The method of any of claims 1 to 7, wherein the displaying of the user data associated with the selected anniversary further comprises displaying, if the quantity of the user data is less than a preset value, user data associated with anniversaries displayed adjacent to the selected anniversary.

9. The method of any of claims 1 to 8, wherein the displaying of a first area and a second area comprises arranging the anniversaries with a graphic element for each anniversary, wherein the size of the graphic element varies according to the quantity of user data associated with the corresponding anniversary.

10. The method of claim 9, further comprising highlighting an area adjacent to the selected graphic element of the selected anniversary with a highlight box, wherein the size of the highlight box varies according to the quantity of user data associated with the selected anniversary.

11. A portable terminal, the terminal comprising:
a memory unit for storing user data associated with pre-stored anniversaries corresponding to at least one classification item;
a display unit for displaying, in a user data display mode, a first area for arranging the pre-stored anniversaries, a second area for displaying data items of each user data, and a third area for arranging the classification items; and
a control unit for displaying, if an anniversary is selected from the first area, data items of the user data associated with the selected anniversary in the second area, and if a classification item is selected from the third area, displaying data items corresponding to the selected classification item in the second area.

12. The portable terminal of claim 11, wherein the control unit displays the second area above the first area, and displays the third area at a side of the second area.

13. The portable terminal of any of claims 11 to 12, wherein the control unit arranges the anniversaries in the first area in a horizontal direction, and displays the classification items in the third area in a vertical direction.

14. The portable terminal of any of claims 11 to 13, wherein the anniversaries comprise at least one of a user anniversary registered by a user and a common anniversary preregistered in the portable terminal as a default anniversary.
